Europäisches Patentamt

European Patent Office

Office européen des brevets

(11) Veröffentlichungsnummer: **0 360 083**
**A2**

(12) **EUROPÄISCHE PATENTANMELDUNG**

(21) Anmeldenummer: 89116583.9

(22) Anmeldetag: 08.09.89

(51) Int. Cl.5: **A01K 31/04**

(30) Priorität: 22.09.88 DE 3832131

(43) Veröffentlichungstag der Anmeldung:
28.03.90 Patentblatt 90/13

(84) Benannte Vertragsstaaten:
AT BE DE ES FR GB GR IT LU NL SE

(71) Anmelder: SALMET GESELLSCHAFT MIT
BESCHRÄNKTER HAFTUNG & Co.
KOMMANDITGESELLSCHAFT
Hilsbacher Strasse 40
D-6921 Ittlingen(DE)

(72) Erfinder: Lackner, Karl Horst
Bauberg 21
D-6921 Ittlingen(DE)

(74) Vertreter: Utermann, Gerd, Dipl.-Ing.
Kilianstrasse 7 Kilianspassage Postfach
3525
D-7100 Heilbronn(DE)

(54) **Kottrocknungseinrichtung für Käfigbatterien.**

(57) Die Kottrocknungseinrichtung(1)weist einen in Längsrichtung über der Käfigbatterie (2) hin und her verfahrbaren Wagen (16) mit einem Radialgebläse 27 auf. Das Gebläse 27 fördert Luft in ein senkrecht herabhängendes Blasrohr (29), das in Höhe einer jeden Käfigetage eine Ausblasdüse (30, 31, 32) trägt. Diese Ausblasdüsen sind so angeordnet, daß aus ihnen ein Belüftungsstrahl 33 austritt, der auf das Kotband 13 unter der betreffenden Käfigreihe (3, 4, 5) auftritt.

Fig. 1

## Kottrocknungseinrichtung für Käfigbatterien

Die Erfindung betrifft eine Kottrocknungseinrichtung für ein- oder mehretagige Käfigbatterien zur Tierhaltung, insbesondere Geflügelhaltung, mit einem Gebläse und wenigstens einem an das Gebläse angeschlossenen Blasrohr mit Ausblasdüsen, die auf unter den horizontalen Käfigreihen verlaufende Kotauffangflächen oder Kottransportbänder gerichtet sind.

Eine solche Einrichtung zum Trocknen des aus den Käfigen herabfallenden Kots unter den Käfigen im Wege der Strahlbelüftung ist bekannt (EP-A 01 08 230 = DE-A1 32 40 346).

Frischer Hühnerkot weist durchschnittlich etwa 22 % Trockensubstanz auf. Dieser breiig schmierende Frischkot ist sehr schwierig zu handhaben und führt ohne Behandlung schnell zu einer intensiven penetranten Geruchsbildung. Dem wird durch die Luftstrahltrocknung an der Auffangstelle des Kots begegnet. So kann eine Trocknung bis auf mehr als 50 % Trockensubstanz erreicht werden, so daß ggf. mit einer Nachtrocknung ein streufähiger Festmist erhalten wird.

Die bekannte Kottrocknungseinrichtung sieht eine Frischluftansaugung mittels des Gebläses vor, das im Bereich eines Außenwanddurchbruchs angeordnet ist. An das Gebläse schließt sich ein an der Raumdecke aufgehängtes Luftleitrohr von großem Durchmesser und großer Länge an, das entsprechend der vergleichsweise langen Verweilzeit der Frischluft als Wärmetauscher wirkt, so daß die Frischlufttemperatur der Stalltemperatur angeglichen wird. Vom Luftleitrohr strömt die Frischluft über ein senkrechtes Abzweigrohr zu mehreren horizontalen Blasrohren, von denen jeweils eines einer Käfigreihe zugeordnet ist und unmittelbar unterhalb des Käfigbodens an der Käfigvorderseite über die gesamte Länge der Käfigbatterie verläuft. Die Blasrohre sind im Bereich eines jeden Käfigs mit Öffnungen versehen, die Blasdüsen bildet, aus denen die Frischluft mit einem vom Gebläse erzeugten Überdruck auf das Transportband unter der Käfigreihe ausströmt.

Eine solche Kottrocknungseinrichtung mit einem Druckluftgebläse und einem Wärmetauscher für angesaugte Frischluft ist vergleichsweise aufwendig, verbraucht viel Energie für den Lufttransport durch das Verteilsystem und ist auch wartungsintensiv, da eine Vielzahl von Düsenöffnungen vorhanden ist, deren ordnungsgemäßes Funktionieren durch Verschmutzungen beeinträchtigt werden kann. Außerdem eignet sich die bekannte Kottrocknungseinrichtung weniger zum nachträglichen Umrüsten von Käfigbatterien auf die beschriebene Luftstrahltrocknung, weil die Blasrohre an den Käfigreihen in einer Stellung angebracht werden müssen, die einerseits vor Verschmutzungen geschützt ist, andererseits aber auch zu einem intensiven Überströmen der Kotauffangflächen führt. Häufig fehlen entsprechende Voraussetzungen bei nachträglich umzurüstenden Käfigbatterien.

Dementsprechend liegt der Erfindung die Aufgabe zugrunde, eine Kottrocknungseinrichtung der eingangs beschriebenen Art zu schaffen, die bei vergleichsweise geringem Aufwand für die Anschaffung, den Energieverbrauch und die Wartung eine leichte Umrüstung bereits vorhandener Käfigbatterien auf eine Strahlbelüftung ermöglicht, die sich den jeweiligen Verhältnissen gut anpassen läßt und sehr wirkungsvoll arbeitet.

Diese Aufgabe wird erfindungsgemäß dadurch gelöst, daß das Gebläse und das Blasrohr längs der Käfigbatterie verfahrbar sind.

Dementsprechend wird der Kot durch Umwälzung von Stalluft getrocknet, die keiner Vorwärmung bedarf und in Käfignähe angesaugt werden kann, so daß es weder eines aufwendigen Luftverteilsystems noch eines leistungsstarken Druckluftgebläses bedarf. Es sind keine Teile des Trocknungseinrichtung in die Käfigbatterie selbst zu integrieren. Ferner schafft die Verfahrbarkeit der Trocknungseinrichtung die Möglichkeit, die Kottrocknung im Bereich der einzelnen Käfige der Reihe nach durchzuführen, was zu einer einfachen und kompakten Trocknungseinrichtung führt, die sich leicht warten und bequem einstellen sowie steuern läßt, um den jeweiligen Verhältnissen entsprechend optimale Bedingungen zu schaffen.

Zweckmäßige Ausgestaltungen und Weiterbildungen der Erfindung ergeben sich aus den Unteransprüchen.

Ein Ausführungsbeispiel der Erfindung wird nachfolgend anhand einer schematischen Zeichnung näher erläutert. Darin zeigt:

Fig. 1 eine Stirnansicht der Käfigbatterie mit der ihr zugeordneten Kottrocknungseinrichtung und

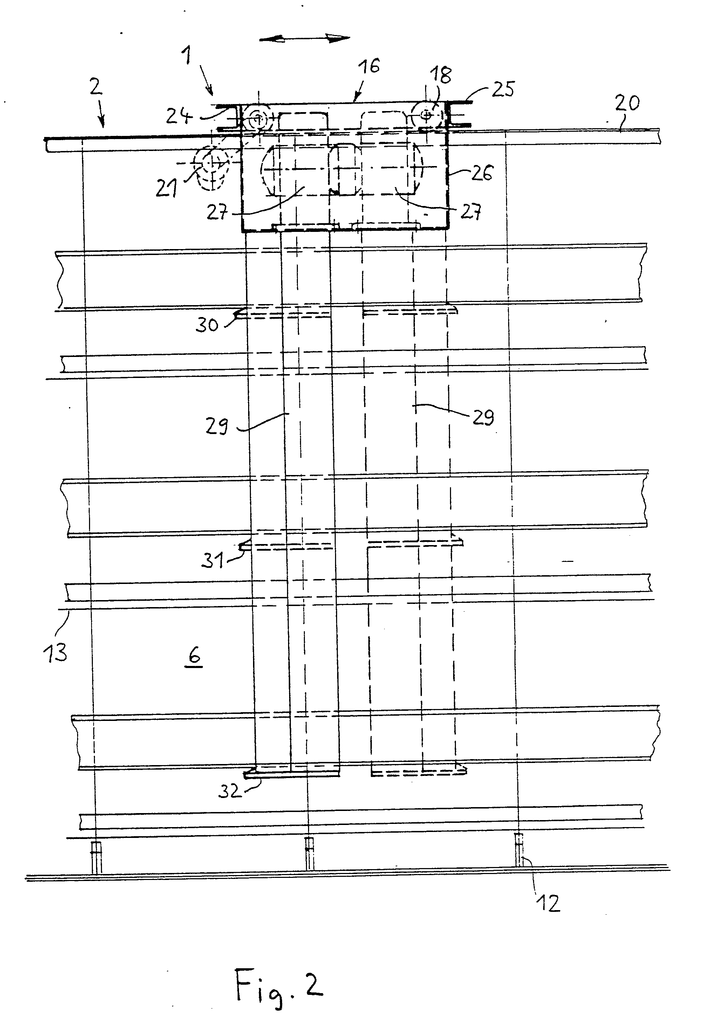

Fig. 2 eine Seitenansicht der Kottrocknungseinrichtung mit einem Längenabschnitt der Käfigbatterie.

Die Kottrocknungseinrichtung 1 ist zusammen mit einer Käfigbatterie 2 dargestellt. Diese weist eine obere Doppelkäfigreihe 3, eine mittlere Doppelkäfigreihe 4 und eine untere Doppelkäfigreihe 5 auf. In jeder Doppelkäfigreihe stoßen die einzelnen Käfige 6 paarweise rückseitig aneinander. Jeder Käfig 6 ist mit einem von seiner Rückwand 8 zur Vorderwand 7 abfallenden Gitterboden 9 versehen, der über die Vorderwand 7 vorspringt und eine Eisammelrinne 10 bildet. Über dieser ist ein Futtertrog 11 vorgesehen, der sich ebenso wie die Eisammelrinne 10 über die ganze Länge der Käfig-

2

batterie 2 erstreckt. Die Batterie ist über Füße 12 abgestützt, die im Bereich der beiden außenliegenden Vorderwände 7 jeweils zwischen benachbarten Käfigen 6 der unteren Doppelkäfigreihe 5 angeordnet sind.

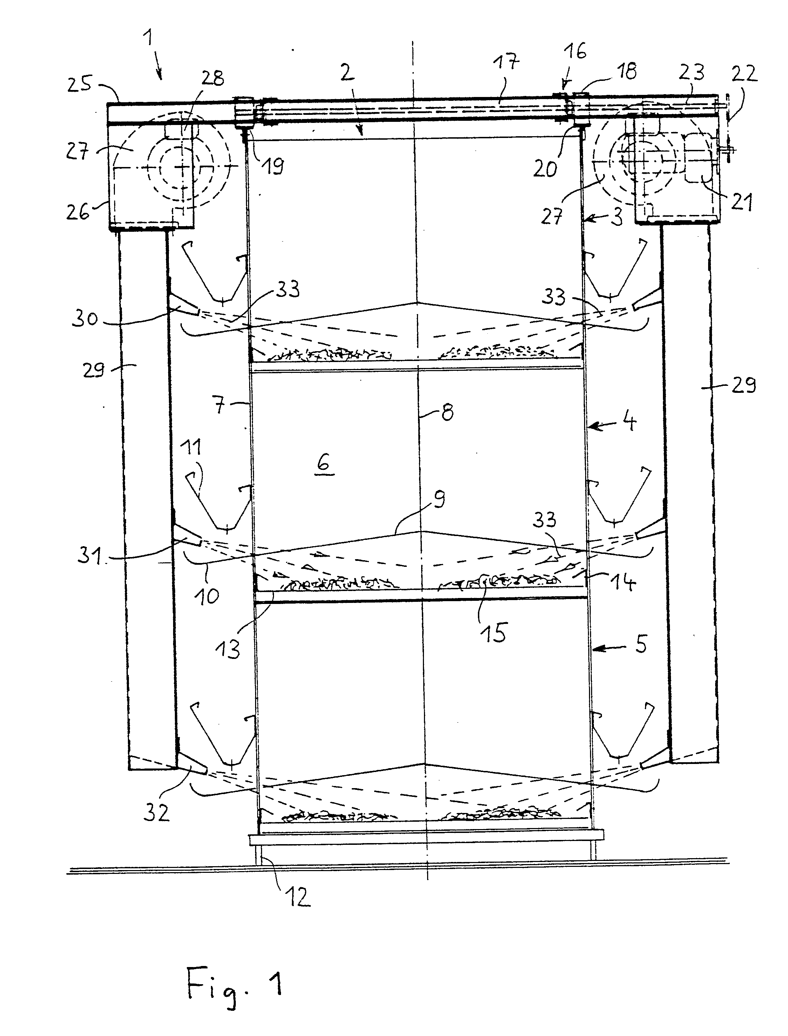

Jede Doppelkäfigreihe 3, 4, 5 ist mit einem Kotband 13 versehen, das sich im Abstand unterhalb der entgegengesetzt geneigten Gitterböden 9 der Käfigpaare über deren Breite erstreckt. An den in Querrichtung weisenden Außenkanten des Kotbandes 13 ist jeweils ein aufragender Randflansch 14 vorgesehen. Das Kotband fängt den durch die Gitterböden 9 herabfallenden Kot 15 auf, wie es in Fig. 1 veranschaulicht ist.

Die Kottrocknungseinrichtung 1 weist einen Wagen 16 auf, der im wesentlichen von einem Rahmen 17 und vier Rädern 18 gebildet ist. Die Räder 18 laufen auf zwei horizontalen Längsschienen 19 und 20, die am oberen Ende der Käfigbatterie an deren linker bzw. rechter Seite angebracht sind und sich über die ganze Länge der Käfigbatterie 2 erstrecken. Der Wagen 16 ist mit einem Fahrmotor 21 versehen, der über eine Untersetzung 22 eine Antriebswelle 23 des Wagens 16 antreibt. Der Fahrmotor 21 kann über nicht dargestellte Steuerungseinrichtungen umkehrbar angetrieben werden, so daß der Wagen 16 im Reversierbetrieb über die gesamte Länge der Käfigbatterie 2 hin und her fährt.

Die beiden Querschienen 24 und 25 des Rahmens 17 ragen wie aus Fig. 1 zu ersehen nach beiden Seiten (rechts und links) über die Käfigbatterie 2 vor und tragen dort jeweils ein Gehäuse 26 mit einem Radialgebläse 27 und einem Blasmotor 28. Jedes Radialgebläse 27 fördert die aus seiner Umgebung angesaugte Luft in ein senkrecht herabhängendes Blasrohr 29, das drei Ausblasdüsen 30, 31 und 32 aufweist. Diese Ausblasdüsen sind als horizontale Breitschlitzdüsen ausgeführt und jeweils einer der drei Doppelkäfigreihen 3, 4, 5 zugeordnet, wobei sie wie in Figur 1 gezeigt eine Höhenlage zwischen dem Futtertrog 11 und der Eisammelrinne 10 der betreffenden Doppelkäfigreihe einnehmen. Die Ausblasdüsen 30, 31, 32 sind etwas abwärts geneigt und erzeugen jeweils einen Belüftungsstrahl 33, der auf die benachbarte Hälfte des betreffenden Kotbands 33 bzw. auf den entsprechenden Kot 15 gerichtet ist.

Da gemäß Figur 1 auf jeder Seite der Käfigbatterie 2 ein Blasrohr 29 mit drei Ausblasdüsen 30, 31, 32 vorhanden ist, ist für jede der sechs Einzelkäfigreihen eine eigene Ausblasdüse vorhanden. Da die Ausblasdüsen mit dem Wagen 16 über die gesamte Länge der Käfigbatterie verfahren werden, wird die Kotauffangfläche eines jeden Käfigs 6 der Batterie 2 in Zeitabständen durch einen Belüftungsstrahl 33 gezielt belüftet. Durch Abstimmung der Leistung der Radialgebläse 27 und der Fahrgeschwindigkeit des Wagens 16 sowie durch Variierung der Zahl und der Ausrichtung der Ausblasdüsen läßt sich somit unabhängig von der Ausführung und Größe der Käfigbatterie eine Kottrocknung im gewünschten Ausmaß erzielen. Der getrocknete Kot wird dann in üblicher Weise von Zeit zu Zeit von den Kotbändern oder Auffangflächen entfernt.

Die im folgenden abgedruckte Zusammenfassung ist Bestandteil der Offenbarung der Erfindung:

Die Kottrocknungseinrichtung(1)weist einen in Längsrichtung über der Käfigbatterie (2) hin und her verfahrbaren Wagen (16) mit einem Radialgebläse 27 auf. Das Gebläse 27 fördert Luft in ein senkrecht herabhängendes Blasrohr (29), das in Höhe einer jeden Käfigetage eine Ausblasdüse (30, 31, 32) trägt. Diese Ausblasdüsen sind so angeordnet, daß aus ihnen ein Belüftungsstrahl 33 austritt, der auf das Kotband 13 unter der betreffenden Käfigreihe (3, 4, 5) auftrifft.

Bezugszeichenliste:

1 Kottrocknungseinrichtung
2 Käfigbatterie
3 obere Doppelkäfigreihe
4 mittlere Doppelkäfigreihe
5 untere Doppelkäfigreihe
6 Käfig
7 Vorderwand
8 Rückwand
9 Gitterboden
10 Eisammelrinne
11 Futtertrog
12 Füße
13 Kotband
14 Randflansch
15 Kot
16 Wagen
17 Rahmen
18 Rad
19 Längsschiene
20 Längsschiene
21 Fahrmotor
22 Untersetzung
23 Antriebswelle
24 Querschiene
25 Querschiene
26 Gehäuse
27 Radialgebläse
28 Blasmotor
29 Blasrohr
30 Ausblasdüse
31 Ausblasdüse
32 Ausblasdüse
33 Belüftungsstrahl

Ansprüche

1. Kottrocknungseinrichtung für ein- oder mehretagige Käfigbatterien zur Tierhaltung, insbesondere Geflügelhaltung, mit einem Gebläse (27) und wenigstens einem an das Gebläse (27) angeschlossenen Blasrohr (29) mit Ausblasdüsen (30, 31, 32), die auf unter den horizontalen Käfigreihen (3, 4, 5) verlaufende Kotauffangflächen oder Kottransportbänder (13) gerichtet sind, **dadurch gekennzeichnet,**
daß das Gebläse (27) und das Blasrohr (29) längs der Käfigbatterie (2) verfahrbar sind.

2. Kottrocknungseinrichtung nach Anspruch 1, **dadurch gekennzeichnet,**
daß das Gebläse (27) und das Blasrohr (29) mittels eines Wagens (16) auf über der Käfigbatterie (2) verlaufenden Schienen (19, 20) verfahrbar sind, daß das Blasrohr (29) mit seitlicher Versetzung zu den Käfigreihen (3, 4, 5) im wesentlichen senkrecht herabragt und. daß jeder Käfigetage wenigstens eine Ausblasdüse (30, 31, 32) zugeordnet ist.

3. Kottrocknungseinrichtung nach Anspruch 2 mit zwei sich rückseitig zugewandten Käfigreihen je Etage,
**dadurch gekennzeichnet,**
daß zwei auf gegenüberliegenden Seiten der Käfigbatterie (2) herabragende Blasrohre (29) mit Ausblasdüsen (30, 31, 32) vorgesehen sind.

4. Kottrocknungseinrichtung nach Anspruch 3, **dadurch gekennzeichnet,**
daß jedem Blasrohr (29) ein eigenes Gebläse (27) zugeordnet ist.

5. Kottrocknungseinrichtung nach einem der Ansprüche 1 bis 4,
**dadurch gekennzeichnet,**
daß die Ausblasdüsen (30, 31, 32) verstellbar am Blasrohr (29) angeordnet sind.

6. Kottrocknungseinrichtung nach einem der Ansprüche 1 bis 5, **dadurch gekennzeichnet,**
daß der Wagen (16) einen reversierbaren Fahrantrieb aufweist.

Fig. 1

Fig. 2